# EUROPÄISCHE PATENTSCHRIFT

(11) **EP 1 174 857 B1**
(45) Veröffentlichungstag und Bekanntmachung des Hinweises auf die Patenterteilung: **11.10.2006**
(21) Anmeldenummer: 01110271.2
(22) Anmeldetag: 26.04.2001
(51) Int. Cl.: G10L 15/26, G10L 17/00, G10L 15/22

(54) **Sprachdialogsystem für Informationszugriff**
Spoken dialogue system for information access
Système d'accès à l'information par dialogue oral

(30) Priorität: 21.07.2000 DE 10035523
(43) Veröffentlichungstag der Anmeldung: 23.01.2002
(73) Patentinhaber: Deutsche Telekom AG, 53113 Bonn (DE)
(72) Erfinder: Trinkel, Marian, 52372 Kreuzau OT Untermaubach (DE); Brenig, Heinrich-Helmut, Dr., 53340 Meckenheim (DE)

(56) Entgegenhaltungen:
- WO-A-00/05869
- WO-A-00/36591
- WO-A-88/05239
- WO-A-96/13030
- COLE R ET AL: "A PROTOTYPE VOICE-RESPONSE QUESTIONNAIRE FOR THE U.S. CENSUS" ICSLP 94: 1994 INTERNATIONAL CONFERENCE ON SPOKEN LANGUAGE PROCESSING. YOKOHAMA, JAPAN, SEPT. 18 - 22, 1994, INTERNATIONAL CONFERENCE ON SPOKEN LANGUAGE PROCESSING. (ICSLP), YOKOHAMA: ASJ, JP, Bd. 2, 18. September 1994 (1994-09-18), Seiten 683-686, XP000855341

## Beschreibung

Die vorliegende Erfindung bezieht sich auf ein Verfahren bzw. ein System zur Durchführung von Teilnehmerbefragungen. Dabei sind die zu befragenden Teilnehmer über ein Datenleitungsnetz mit einem zentralen Rechner verbunden, der die einzelnen Antworten registriert.

Ein derartiges System ist beispielsweise in der süddeutschen Kleinstadt Haßloch, deren Einwohnerstruktur die bundesdeutsche Bevölkerung sehr gut repräsentiert, realisiert. In dieser Kleinstadt ist jeder Haushalt über ein eigens dafür zur Verfügung gestelltes Gerät mit einem Zentralrechner verbunden. Über diese Schnittstelle kann jeder Bürger Fragen zum Konsumverhalten seines Haushaltes, die über den Zentralrechner vorgegeben werden, beantworten. Dieses System ist einerseits aufwendig und in diesem Falle lokal auf Haßloch beschränkt. Diese Beschränkung führt zu einer Qualitätseinbuße bei der statistischen Auswertung.

Die Veröffentlichung "A prototype voice-respopnse questionnaire for the U.S. census" von Ronald Cole, in Proc. International Conference on Spoken Language Procesing, 1994, offenbart ein System zur Durchführung von automatisierten Dialogen zwischen einem Computer und einer Anzhal von Teilnehmern, die über ein Datenleitungsnetz mit einander verbunden sind.

Dokument WO 96/13030 offenbart ein verfahren zur Durchführung einer standardisierten Teilnehmerbefragung über ein Datenleitungsnetz.

In dem Dokument WO 00/05869 wird der Aufenthalt von Kriminellen Personen, die sich zur Strafverfolgung offensichtlich nicht in einem Gefängnis befinden, mittels Spracherkennung überprüft.

Die Aufgabe der Erfindung ist es, ein Verfahren zu schaffen, das unter Verwendung einfacher Mittel geeignet ist, automatisierte Befragungen bei einer großen Anzahl von Teilnehmern durchzuführen. Es ist gleichfalls Aufgabe der Erfindung ein kostengünstiges und zuverlässiges System zur Durchführung der Befragungen zu schaffen.

Diese Aufgaben werden durch das Verfahren nach Anspruch 1 und das System nach Anspruch 5 gelöst.

Der Grundgedanke der Erfindung liegt darin, jedermann, der an ein Netz, beispielsweise ein Telephonnetz oder das Internet angeschlossen ist, die Möglichkeit zu geben, über dieses Netz Kontakt zu einem ebenfalls mit dem Netz verbundenen Rechner aufzunehmen, der mit einem Sprachmodul eine automatisierte Befragung durchführt. Dabei ist der Computer wie jeder andere Teilnehmer auch über eine individuelle Netzkennung anwählbar. Das auf dem Computer realisierte Sprachmodul meldet sich nach dem Anwählen des Computers mit gesprochenen Worten bei dem Teilnehmer und führt mit diesem einen Dialog, der sich an einem vorgegebenen Fragenkatalog orientiert. Dadurch daß über dieses Verfahren bzw. das dieses Verfahren umsetzende System alle am Netz angeschlossenen Personen erreicht werden, können Umfragen hoher statistischer Aussagekraft durchgeführt werden. Zur Unterstützung der Datenverarbeitung ist es vorteilhaft, dem Sprachmodul einen Ergebnisspeicher zuzuordnen, auf dem der Computer Ergebnisse des Dialoges und/oder zumindest in Ausschnitten die Antworten des Teilnehmers speichert. Dieser Speicher stellt die Daten für eine weitere Verarbeitung zur Verfügung.

Der Anrufer wird erfindungsgemäß vom Computer in an sich bekannter Weise durch einen Dialog geführt und seine Antworten auf die vom Computer gestellten Fragen als Eingaben gespeichert. Die Erfindung nutzt dabei vorhandene Ressourcen, nämlich ein Datennetz, einen damit verbundenen zentralen Server und ein darauf installiertes Sprachmodul. Grundlegend für die Erfindung ist auch die Realisierung des Sprachmodules durch die auf dem Server laufenden Software. Die mit solch einem System zu erzielenden Vorteile resultieren aus der Automatisierung der Befragung und aus der Möglichkeit, eine nahezu unbegrenzte Anzahl zu befragender Personen erreichen zu können.

Dabei ist es in einer vorteilhaften Ausführungsform Bestandteil der Erfindung, die potentiellen Teilnehmer zu diesen Befragungen zu animieren. Dies kann durch das Schalten von Anzeigen in Medien (vorteilhafterweise im Internet) geschehen, in denen auch Präsente, beispielsweise kostenlose Gesprächseinheiten oder Nutzungseinheiten in dem jeweiligen Netz, angeboten werden. Die Teilnehmer können auch über öffentliche Medien auf die Teilnehmerbefragung hingewiesen werden.

In einer vorteilhaften Ausführungsform identifizieren und/oder autorisieren sich die Teilnehmer über einen dem Computer über das Netz vorgebbaren Code. Dieser Code kann in der Netzkennung (Telephonnummer) des Anrufenden liegen. Besonders vorteilhaft ist es jedoch, die Begrüßungsworte eines Teilnehmers einer Spracherkennungseinheit zuzuführen, die den Teilnehmer aufgrund seiner Stimme identifiziert und/oder autorisiert. So kann ausgeschlossen werden, daß die Statistik durch Mehrfachanrufe verfälscht wird. In einer anderen Ausführungsform ist es auch möglich, dem System eine Leseeinheit zuzuordnen, der eine den Teilnehmer identifizierende Key-Card zuführbar ist.

Insgesamt zeichnet sich das System durch eine große Datensicherheit aus, da sich die Befragung vollständig anonymisieren läßt. Diese Datensicherheit erhöht beim Teilnehmer zudem die Bereitschaft, an der Befragung teilzunehmen. Durch die Nutzung vorhandener Ressourcen läßt sich die Erfindung kostengünstig und einfach ohne weiteren technischen Aufwand realisieren. Die Nutzung bestehender Netze gewährleistet eine hohe Betriebssicherheit.

## Patentansprüche

1. Verfahren zur Durchführung einer standardisierten Teilnehmerbefragung über ein Datenleitungsnetz, bei dem den Teilnehmern ein ans Netz angeschlossener Computer zur Verfügung gestellt wird, der von Teilnehmern über eine Netzkennung angewählt wird, wobei der Computer ein dialogfähiges Sprachmodul aufweist, das sich nach dem Anwählen des Computers mit gesprochenen Worten bei einem Teilnehmer meldet und mit diesem einen Dialog führt, der sich an einem vorgegebenen Fragenkatalog orientiert, wobei sich ein Teilnehmer über einen dem Computer über das Netz vorgebbaren Code identifiziert und/oder autorisiert und die Worte eines Teilnehmers einer Spracherkennungseinheit zugeführt werden, die den Teilnehmer aufgrund seiner Stimme identifiziert und/oder autorisiert, **dadurch gekennzeichnet, daß** durch die Identifizierung/Autorisierung ausgeschlossen wird, dass eine Befragungsstatistik durch Mehrfachanrufe desselben Teilnehmers verfälscht wird.

2. Verfahren nach Anspruch 1, **dadurch gekennzeichnet, daß** es sich bei dem Code um die Netzkennung des Anrufenden handelt.

3. Verfahren nach Anspruch 1 oder 2, **dadurch gekennzeichnet, daß** die Teilnehmer über öffentliche Medien auf die Teilnehmerbefragung hingewiesen werden.

4. Verfahren nach einem der vorherigen Ansprüche, **dadurch gekennzeichnet, daß** die Teilnehmer nach einer erfolgreichen Befragung einen Bonus erhalten, wobei der Bonus insbesondere in freien Nutzungseinheiten für das Netz besteht.

5. System zur Durchführung von automatisierten Teilnehmerbefragungen aufweisend ein Datenleitungsnetz an das eine Anzahl von Teilnehmer angeschlossen sind, sowie einen an das Netz angeschlossenen Computer, auf dem ein dialogfähiges Sprachmodul realisiert ist, das die von einem den Computer anrufenden Teilnehmer gesprochenen Worte verarbeitet und selber Worte generiert, die es dem Teilnehmer über das Netz zusendet, wobei das Sprachmodul mit dem den Computer anrufenden Teilnehmer eine Befragung anhand eines dem Computer vorgegebenen Fragenkataloges durchführt und ein Teilnehmer über einen dem Computer über das Netz vorgebbaren Code identifizierbar und/oder autorisierbar und die Worte eines Teilnehmers einer Spracherkennungseinheit zuführbar sind, mittels der der Teilnehmer aufgrund seiner Stimme identifizierbar und/oder autorisierbar ist, **dadurch gekennzeichnet, dass** das System so angeordnet ist **dass** durch die Identifizierung/Autorisierung die Verfälschung einer Befragungsstatistik durch Mehrfachanrufe desselben Teilnehmers ausschließbar ist.

6. System nach Anspruch 5, **gekennzeichnet durch** eine Leseeinheit, der eine den Teilnehmer identifizierende Key-Card zuführbar ist.

7. System nach Anspruch 5 oder 6, **dadurch gekennzeichnet, daß** es sich bei dem Code um die Netzkennung des Anrufenden handelt.

8. System nach einem der vorherigen Ansprüche 5 bis 7, **dadurch gekennzeichnet, dass** das Datenleitungsnetz ein Telephonnetz und/oder das Internet ist.

9. System nach einem der vorherigen Ansprüche 5 bis 8, **dadurch gekennzeichnet, dass** dem Sprachmodul ein Ergebnisspeicher zugeordnet ist, auf dem der Computer Ergebnisse des Dialoges und/oder zumindest in Ausschnitten die Antworten des Teilnehmers speichert.

## Claims

1. Method for conducting a standardized user survey via a data transmission network, wherein a computer which is connected to the network is made available to the users and is dialed into by users by means of a network ID, the computer having an interoperable voice module, which after the computer is dialed into answers a user with spoken words and conducts a dialog with the user, which is orientated to a pre-selected questionnaire, whereby a user identifies and/or authorizes himself by means of a code that can be stipulated to the computer via the network and the words of a user are relayed to a voice recognition unit that identifies and/or authorizes the user on the basis of his voice, **characterized in that** as the result of the identification/authorization the corruption of the survey statistics by multiple calls from the same user is ruled out.

2. Method according to claim 1, **characterized in that** the code is the caller's network ID.

3. Method according to claim 1 or 2, **characterized in that** the users are notified via public media about the user survey.

4. Method according to one of the pervious claims, **characterized in that** after a successful interview the users receive a bonus, said bonus consisting in particular of free units for the use of the network.

5. System for conducting automated user surveys, having a data transmission network to which a number of users are connected, as well as a computer which is connected to the network and on which an interoperable voice module is implemented, which processes the words spoken by a user who is calling the computer and itself generates words that it sends to the user via the network, whereby the voice module conducts a survey with the user who is calling the computer on the basis of a questionnaire that has been given to the computer and a user can be identified and/or authorized by means of the code that can be stipulated to the computer via the network, **characterized in that** the system is arranged in such a way that as the result of the identification/authorization any corruption of the survey statistics by multiple calls from the same user can be ruled out.

6. System according to claim 5, **characterized by** a reading unit into which a key card that identifies the user can be inserted.

7. System according to claim 5 or 6, **characterized in that** the code is the caller's network ID.

8. System according to the previous claims 5 to 7, **characterized in that** the data transmission network is a telephone network and/or the Internet.

9. System according to the previous claims 5 to 8, **characterized in that** a results storage device, on which the computer stores the results of the dialog and/or at least excerpts of the user's answer, is assigned to the voice module.

## Revendications

1. Procédé de réalisation d'une enquête standardisée auprès d'abonnés par l'intermédiaire d'un réseau de ligne de données, dans lequel un ordinateur raccordé au réseau est mis à la disposition des abonnés, les abonnés se connectant audit ordinateur par l'intermédiaire d'un identifiant réseau, ledit ordinateur comportant un module vocal interactif qui, après connexion à l'ordinateur, répond à un abonné avec des mots parlés et mène avec celui-ci un dialogue suivant un questionnaire prédéfini, un abonné s'identifiant et/ou demandant l'autorisation par l'intermédiaire d'un code prédéfinissable dans l'ordinateur par l'intermédiaire du réseau et les mots d'un abonné étant appliqués à une unité de reconnaissance de la parole qui identifié et/ou autorisé l'abonné, **caractérisé en ce que** l'identification/autorisation permet d'exclure qu'une statistique d'enquête soit faussée par des appels multiples vers le même abonné.

2. Procédé selon la revendication 1, **caractérisé en ce que** le code correspond à l'identifiant réseau de l'appelant.

3. Procédé selon la revendication 1 ou 2, **caractérisé en ce que** les abonnés sont avisés de l'enquête auprès d'abonnés par l'intermédiaire de médias publics.

4. Procédé selon l'une des revendications précédentes, **caractérisé en ce que** les abonnés bénéficient d'un bonus après une enquête réussie, le bonus consistant notamment en des unités de libre utilisation du réseau.

5. Système pour la réalisation d'enquêtes automatisées auprès d'abonnés comportant un réseau de ligne de données auquel sont raccordés un nombre d'abonnés, ainsi qu'un ordinateur raccordé au réseau sur lequel est réalisé un module vocal interactif qui traite les mots d'un abonné appelant l'ordinateur et qui génère lui-même des mots qu'il envoie à l'abonné par l'intermédiaire du réseau, le module vocal réalisant, auprès de l'abonné appelant l'ordinateur, une enquête moyennant un questionnaire prédéfini dans l'ordinateur et un abonné pouvant être identifié et/ou autorisé par l'intermédiaire d'un code prédéfinissable dans l'ordinateur par l'intermédiaire du réseau et les mots d'un abonné pouvant être appliqués à une unité de reconnaissance de la parole, au moyen de laquelle l'abonné peut être identifié et/ou autorisé grâce à sa voix, **caractérisé en ce que** le système est disposé de manière que l'identification/autorisation permette d'exclure qu'une statistique d'enquête soit faussée par des appels multiples vers le même abonné.

6. Système selon la revendication 5, **caractérisé par** une unité de lecture dans laquelle peut être introduite une carte-clé identifiant l'abonné.

7. Système selon la revendication 5 ou 6, **caractérisé en ce que** le code correspond à l'identifiant réseau de l'appelant.

8. Système selon l'une des revendications 5 à 7, **caractérisé en ce que** le réseau de ligne de données est un réseau téléphonique et/ou l'Internet.

9. Système selon l'une des revendications 5 à 8, **caractérisé en ce que** le module vocal est affecté à une mémoire de résultat dans laquelle l'ordinateur enregistre des résultats du dialogue et/ou, au moins par extraits, les réponses de l'abonné.
